# EUROPEAN PATENT APPLICATION

(11) **EP 4 685 423 A1**
(43) Date of publication of application: **28.01.2026**
(21) Application number: 24835910.1
(22) Date of filing: 19.06.2024
(51) Int. Cl.: F27B 21/14, C22B 1/16

(54) **PRODUCTION DEVICE FOR SINTERED ORE AND PRODUCTION METHOD FOR SINTERED ORE**

(30) Priority: 03.07.2023 JP 2023109656
(71) Applicant: JFE Steel Corporation, Tokyo, 100-0011 (JP)
(72) Inventor: YASUHARA Satoki, Tokyo 100-0011 (JP); HASHIMOTO Yoshinari, Tokyo 100-0011 (JP)
(74) Representative: Hoffmann Eitle
(86) International application number: PCT/JP2024/022312
(87) International publication number: WO 2025/009397

(57) **Abstract**

A sintered ore production device (10) includes an acquisition interface (12) configured to acquire data on operational conditions in a sintered ore production facility as input data, an FeO content of sintered ore predictor (13) configured to predict an FeO content of sintered ore after a predetermined time based on the acquired input data, a control amount calculator (14) configured to calculate a control amount of an agglomerating material blending ratio based on the predicted FeO content of sintered ore and a predetermined target range of the FeO content of sintered ore, and an output interface (15) configured to output the calculated control amount to another production facility or present the calculated control amount as a guidance control amount.

## Description

### TECHNICAL FIELD

The present disclosure relates to a sintered ore production device and a method of producing sintered ore.

### BACKGROUND

In the steel industry, iron ore grades are declining due to years of mining. A higher proportion of fine ore, which is subjected to ore beneficiation at the mine site to have a high fine fraction ratio, is therefore in use, and the sintering process, whereby sintered ore is produced by agglomeration of fine ore before blast furnace charging, has become more important.

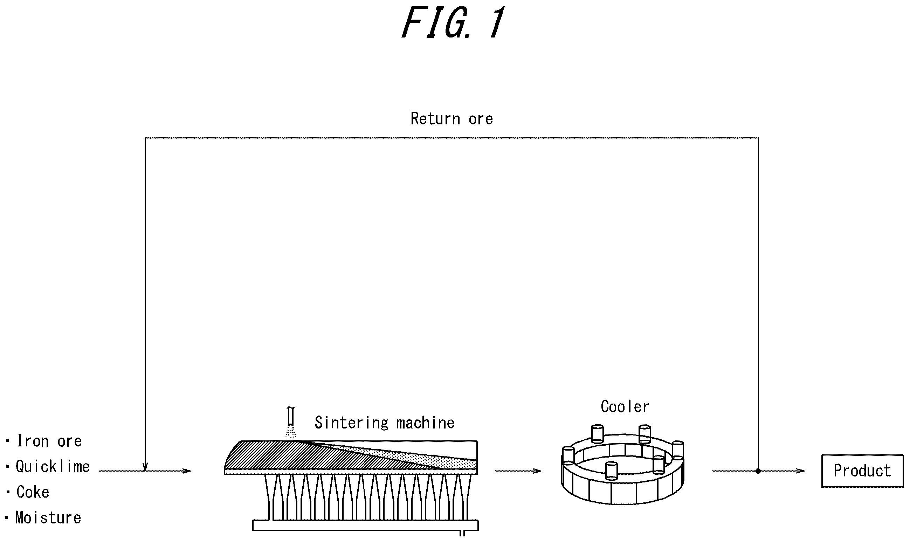

FIG. 1 is a diagram illustrating an overview of the sintering process. Sintered ore is produced for use as an iron source for blast furnaces by burning iron ore with a small particle size using the heat from the combustion of an agglomerating material. The raw material for sintered ore is stored in a hopper and is discharged from the hopper. If powdery iron ore is directly charged into a sintering machine, the combustion reaction is inhibited due to deterioration of ventilation. Therefore, in the granulation process, iron ore, along with other raw materials such as quicklime and coke, is mixed with water in a granulation mixer and processed into granules with larger particle sizes than the original raw materials. The granulated material is charged into a sintering machine and ignited in an ignition furnace, after which the combustion reaction progresses gradually in layers from top to bottom due to air suction from below. After sintering, the sintered ore is discharged from the sintering machine, crushed in a crusher, and then sent to a cooler. After being cooled by air in the cooler duct, the material is sorted through a screen, and sintered ore with a large particle size are sent to the blast furnace as a non-defective product ("product" in FIG. 1). Sintered ore with a small particle size (for example, a particle size of 4 mm or less) is returned to a return ore hopper as return ore, and then discharged from the return ore hopper and fed into the sintering machine again.

Here, since sintered ore accounts for a high proportion of the charges to a blast furnace (for example, about 80 %), the properties of the sintered ore have a large impact on the operation of the blast furnace. In particular, the Reduction Degradation Index (RDI), which is an index of the ease with which sintered ore pulverizes when reduced in a low temperature range, is important. The higher the RDI, the more easily the sintered ore is pulverized, which causes deterioration of furnace conditions due to deterioration of ventilation in the blast furnace and uneven gas flow. The RDI is closely related to the FeO content in the sintered ore (hereinafter referred to as the FeO content of sintered ore). Therefore, an operation is carried out to reduce the variation in RDI by controlling the FeO content of sintered ore within a target range using the blending ratio of agglomerating material (carbonaceous materials such as coke fines) as an operational variable.

The FeO content of sintered ore is measured by chemical analysis, but this measurement takes time. For example, it may take 3 hours for cooling in the cooler and sampling, and 2 hours to analyze the sample, yielding a total measurement time of about 5 hours. In this example, an increase in the FeO content of sintered ore is detectable after 5 hours. This means corrective action will be delayed by 5 hours. When the FeO content of sintered ore decreases, it similarly takes about 5 hours to detect the decrease in the FeO content of sintered ore, which delays the implementation of actions. In order to detect and control fluctuations in the FeO content of sintered ore early, it is important to predict the FeO content of sintered ore and take action in advance or shorten the measurement time.

In relation to shortening the measurement time, a conventional method is known in which the FeO content of sintered ore is measured by detecting changes in inductance using a coil. However, the method of detecting changes in inductance using a coil has a large margin of error and generally has low measurement accuracy. It is known that the higher the FeO content of sintered ore, the higher the sintered ore strength tends to be. For example, Patent Literature (PTL) 1 discloses a method for predicting the sintered ore strength from the calcium ferrite content, slag content, pore size distribution index, and porosity, which are the constituent minerals of sintered ore.

### CITATION LIST

### Patent Literature

PTL 1: JP H7-11349 A

### SUMMARY

### (Technical Problem)

However, the method of PTL 1 requires sampling tests to identify physical properties and is not capable of continuously predicting the sintered ore strength.

In view of the above circumstances, an aim of the present disclosure is to provide a sintered ore production device and a method of producing sintered ore that can predict the FeO content of sintered ore with high accuracy and control the FeO content of sintered ore to be within a target range.

### (Solution to Problem)

(1) A sintered ore production device according to an embodiment of the present disclosure includes
   an acquisition interface configured to acquire data on operational conditions in a sintered ore production facility as input data;
   an FeO content of sintered ore predictor configured to predict an FeO content of sintered ore after a predetermined time based on the acquired input data;
   a control amount calculator configured to calculate a control amount of a blending ratio of an agglomerating material based on the predicted FeO content of sintered ore and a predetermined target range of the FeO content of sintered ore; and
   an output interface configured to output the calculated control amount to another production facility or present the calculated control amount as a guidance control amount.
(2) As an embodiment of the present disclosure, in (1),
   the input data includes at least one of a raw material brand, moisture content of raw material, water spraying flow rate in a granulation mixer, agglomerating material blending ratio, quicklime blending ratio, iron ore blending ratio, return ore blending ratio, exhaust gas NOₓ concentration, exhaust gas O₂ concentration, exhaust gas CO concentration, exhaust gas CO₂ concentration, exhaust gas SOₓ concentration, exhaust gas temperature, cooler blast pressure, cooler exhaust gas temperature, pallet speed, layer thickness, and production quantity.
(3) As an embodiment of the present disclosure, in (1) or (2),
   the FeO content of sintered ore predictor predicts the FeO content of sintered ore using, as the input data, data acquired taking into consideration a delay time based on a timing at which the FeO content of sintered ore can be identified.
(4) As an embodiment of the present disclosure, any one of (1) to (3) further includes
   a learning unit configured to evaluate a prediction error of the predicted FeO content of sintered ore and perform additional learning or relearning of a prediction model used in the FeO content of sintered ore predictor according to a predetermined standard.
(5) A method of producing sintered ore according to an embodiment of the present disclosure includes
   acquiring data on operational conditions in a sintered ore production facility as input data;
   predicting an FeO content of sintered ore after a predetermined time based on the acquired input data;
   calculating a control amount of a blending ratio of an agglomerating material based on the predicted FeO content of sintered ore and a predetermined target range of the FeO content of sintered ore; and
   outputting the calculated control amount to another production facility or presenting the calculated control amount as a guidance control amount.

### (Advantageous Effect)

According to the present disclosure, a sintered ore production device and a method of producing sintered ore that can predict the FeO content of sintered ore with high accuracy and control the FeO content of sintered ore to be within a target range can be provided.

### BRIEF DESCRIPTION OF THE DRAWINGS

In the accompanying drawings:
FIG. 1 is a diagram illustrating an overview of the sintering process;
FIG. 2 is a diagram illustrating the error in the predicted value of a prediction model depending on the number of explanatory variables;
FIG. 3 is a diagram illustrating an example of the configuration of a sintered ore production device according to an embodiment of the present disclosure;
FIG. 4 is a flowchart illustrating a method of producing sintered ore according to an embodiment of the present disclosure;
FIG. 5 is a diagram illustrating the results of Example 1; and
FIG. 6 is a diagram illustrating the results of Example 2.

### DETAILED DESCRIPTION

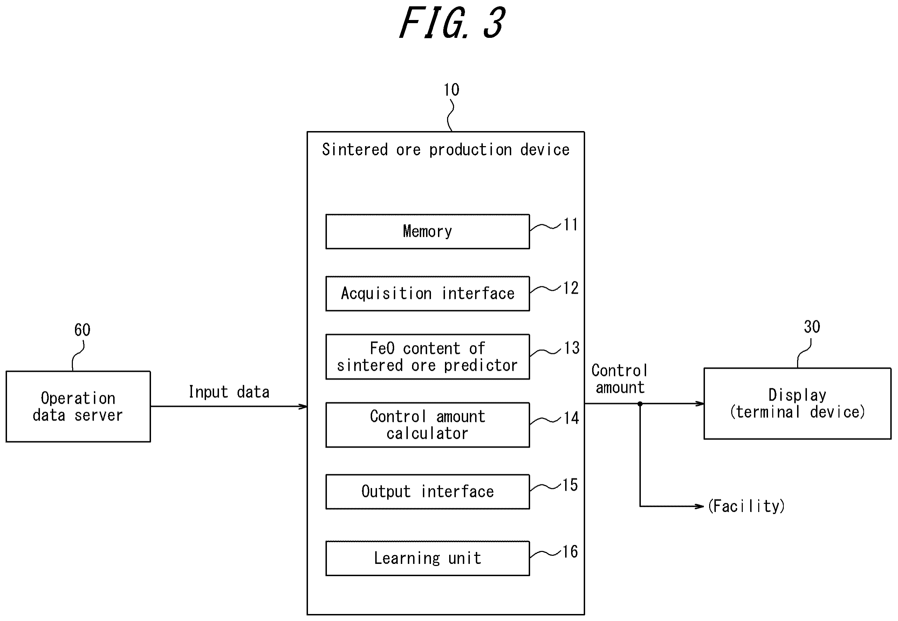

Hereinafter, a sintered ore production device 10 (see FIG. 3 ) and a method of producing sintered ore according to an embodiment of the present disclosure will be described with reference to the drawings. In summary, the method of producing sintered ore according to the present embodiment predicts the FeO content of sintered ore in real time using a machine learning model. A machine learning model is a trained model generated by machine learning. Then, based on the predicted value, the control amount for the agglomerating material blending ratio so that the FeO content of sintered ore falls within a target range is calculated and outputted, thereby enabling control of the FeO content of sintered ore within an appropriate range and implementation of appropriate operational actions.

In the method of producing sintered ore according to the present embodiment, the FeO content of sintered ore is predicted using a prediction model. The FeO content of sintered ore is the ratio of FeO to all components in the sintered ore, and may be expressed as "%" as in the present embodiment, for example. In the following description, the notation "%" means mass%. Data relating to the operational conditions of a facility for producing sintered ore (sintered ore production facility), which includes a sintering machine, a return ore hopper, and the like, is inputted as input data to the prediction model. The prediction model takes the input data as explanatory variables and the FeO content of sintered ore as a response variable. Then, the sintering process carried out in the sintered ore production facility can be controlled based on the predicted value of the FeO content of sintered ore. For example, a sintered ore production facility can automatically or through operator intervention take operational action to ensure that the FeO content of sintered ore is within a predetermined target range during the sintering process.

The input data includes at least one of a raw material brand, moisture content of raw material, water spraying flow rate in a granulation mixer, agglomerating material blending ratio, quicklime blending ratio, iron ore blending ratio, return ore blending ratio, exhaust gas NOₓ concentration, exhaust gas O₂ concentration, exhaust gas CO concentration, exhaust gas CO₂ concentration, exhaust gas SOₓ concentration, exhaust gas temperature, cooler blast pressure, cooler exhaust gas temperature, pallet speed, layer thickness, and production quantity. For example, the input data may include all of these features, and may also include other operational factors. Here, the raw material brand and moisture content of raw material are the brand of iron ore in the raw material and the moisture content in the raw material, respectively. As described above, iron ore is mixed with water in the granulation mixer along with other raw materials such as quicklime and coke, and the water spraying flow rate is the flow rate at which the mixed water is sprayed. The agglomerating material blending ratio, quicklime blending ratio, iron ore blending ratio, and return ore blending ratio are blending ratios of the carbonaceous material, quicklime, iron ore, and return ore in the raw material for sintered ore, respectively. The agglomerating material is, for example, a carbonaceous material such as coke fines. The exhaust gas NOₓ concentration, exhaust gas O₂ concentration, exhaust gas CO concentration, exhaust gas CO₂ concentration, exhaust gas SOₓ concentration, and exhaust gas temperature are the concentrations and temperature of the components of the exhaust gas generated during sintering. The cooler blast pressure is the pressure of the air blown by the cooler when cooling the sintered ore. The cooler exhaust gas temperature is the temperature of the exhaust gas sucked into the cooler. The pallet speed is the conveying speed of the pallet that transports the raw materials during sintering. The layer thickness is the thickness of the layer of material on the pallet. The production quantity is the amount of sintered ore produced.

Among the above features, the exhaust gas NOₓ concentration, exhaust gas O₂ concentration, exhaust gas temperature, and agglomerating material blending ratio are particularly important. The input data is preferably configured to include at least the exhaust gas NOₓ concentration, the exhaust gas O₂ concentration, the exhaust gas temperature, and the agglomerating material blending ratio. As the sintering proceeds, O₂ is consumed. Then, the CO partial pressure increases and NOₓ is consumed, causing reduction to progress and the FeO content of sintered ore to increase. Since the exhaust gas temperature increases as the sintering temperature increases, it is possible to predict the FeO content of sintered ore based on the exhaust gas temperature. If the agglomerating material blending ratio decreases, the FeO content of sintered ore decreases. If the agglomerating material blending ratio increases, the FeO content of sintered ore increases.

The prediction model is not limited to a specific model as long as it is configured to obtain the response variable (the FeO content of sintered ore) from the explanatory variables. The prediction model may be, for example, a physical model or a machine learning model. In the present embodiment, the prediction model is generated by machine learning. As a machine learning technique, linear regression, hierarchical model, neural network, decision tree, GBDT (Gradient Boosting Decision Tree), random forest, transformer, or the like can be used, with no particular limitation. The prediction model is generated using, for example, actual data (such as past measured values and past set values) in the sintering process before the FeO content of sintered ore is predicted.

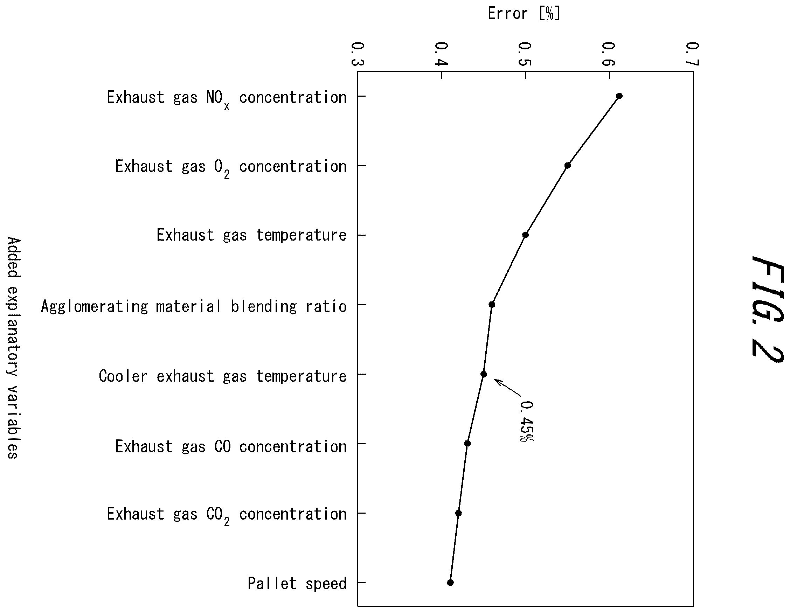

FIG. 2 illustrates an example of evaluating a prediction model generated by a neural network technique. The number (type) of explanatory variables in machine learning was increased, and the error between the predicted value of the FeO content of sintered ore by each machine learning model and the actual FeO content of sintered ore was measured. For example, the prediction error using a prediction model in which the only explanatory variable is the exhaust gas NOₓ concentration is 0.6 % or more. In contrast, the prediction error using a prediction model in which the explanatory variables are, for example, the exhaust gas NOₓ concentration, the exhaust gas O₂ concentration, the exhaust gas temperature, the agglomerating material blending ratio, and the cooler exhaust gas temperature, is 0.45 %. Thus, the error tends to decrease as the number of explanatory variables increases. Here, FIG. 2 illustrates an example of the order in which explanatory variables are added. For example, the agglomerating material blending ratio may be added after the exhaust gas NOₓ concentration as an explanatory variable. Regardless of the order in which explanatory variables are added in FIG. 2, the error tends to decrease as the number of explanatory variables increases.

Here, when the prediction model is a neural network, it is desirable to use a model (a prediction model using hyperparameters) that has been optimized by adjusting hyperparameters to minimize prediction errors. The hyperparameters include the number of neurons in the neural network, the number of layers, the learning rate, the number of epochs, the dropout rate, the type of activation function, and the like.

Various operational factors (operational variables for the sintering process) can be used as input data for the prediction model, but the time it takes to affect the FeO content of sintered ore varies depending on the operational variables. For example, the agglomerating material blending ratio, which is data related to the raw materials, is located upstream in the sintering process and can thus affect the FeO content of sintered ore after 7 hours. For example, the exhaust gas NOₓ concentration, exhaust gas O₂ concentration, and exhaust gas temperature, which are data related to sintering, are located midstream in the sintering process and can thus affect the FeO content of sintered ore after 5 hours. For example, the cooler blast pressure and the cooler exhaust gas temperature, which are cooler-related data, are located downstream in the sintering process and can thus affect the FeO content of sintered ore after 4.5 hours. The time until the FeO content of sintered ore is affected can also vary depending on the pallet speed. Therefore, for accurate prediction, it is preferable that the input data for the prediction model be acquired taking into consideration a delay time based on the timing at which the FeO content of sintered ore can be identified. Here, the timing at which the FeO content of sintered ore can be identified may be, for example, when the sintered ore is sorted through a screen after being cooled in the cooler, and is then subjected to a process to determine whether the particle size satisfies a standard. The operational variables that affected the sintered ore at this particular time may be obtained taking into consideration the aforementioned delay time. Similarly, the prediction model is preferably generated by machine learning using training data, in which data corresponding to explanatory variables (input data) extracted from actual data in the sintering process and the FeO content of sintered ore extracted from the performance data are associated taking into consideration the delay time.

Using the above-described input data and prediction model, a process for predicting the FeO content of sintered ore is executed. To avoid delaying corrective action, the FeO content of sintered ore after a predetermined time (for example, 5 hours) is predicted. For accurate prediction, it is preferable that the input data take into consideration the delay time based on the timing at which the FeO content of sintered ore can be identified. The control amount for the operational variable in the sintering process is calculated so that the predicted value of the FeO content of sintered ore falls within the target range. In the present embodiment, if the FeO content of sintered ore exceeds a preset target range in the future, an action is taken to reduce the FeO content of sintered ore by lowering the agglomerating material blending ratio. Furthermore, if the FeO content of sintered ore falls below the target range in the future, an action is taken to increase the agglomerating material blending ratio to increase the FeO content of sintered ore. In calculating the control amount, a machine learning model using the control amount as an explanatory variable may be constructed, and a control amount such that the predicted value of the FeO content of sintered ore matches the target value (for example, the median of the target range) may be calculated by inverse analysis. As another example, a physical model and a machine learning model may be used in combination to calculate the control amount. In this case, a simulation of changing the agglomerating material blending ratio is carried out using a physical model. Then, the future operating conditions predicted by the simulation (for example, exhaust gas NOₓ concentration, exhaust gas O₂ concentration, and the like) are used as input, and the FeO content of sintered ore is predicted using a machine learning model. The agglomerating material blending ratio may be calculated by inverse analysis so that the value of the FeO content of sintered ore predicted in this way matches the target value.

As described above, an effective action for increasing the FeO content of sintered ore is to increase the agglomerating material blending ratio, which is a heat source, to promote reduction. Conversely, an effective action to reduce the FeO content of sintered ore is to reduce the agglomerating material blending ratio to suppress reduction. If the agglomerating material blending ratio is changed drastically at once, the furnace conditions may change significantly, causing unstable operation. Therefore, in order to prevent excessive operation (excessive control amount), a range of the control amount per operation may be determined, and operations may be performed multiple times within the range.

Here, the calculated control amount of the operational variable (the agglomerating material blending ratio in the present embodiment) may be output to, for example, a process computer that manages the sintering process. Here, the output of the control amount includes output as operational guidance to the operator who is operating the sintering machine. That is, the control amount may be outputted so that the appropriate control amount for the operational variable is reflected in the sintering process through the judgment of the operator. The information output as operational guidance includes at least the calculated control amount for the operational variable, and may be displayed on a display that can be seen by the operator.

FIG. 3 is a diagram illustrating the configuration of a sintered ore production device 10 according to the present embodiment. The sintered ore production device 10 is a part of a sintered ore production facility and performs control related to the FeO content of sintered ore, including the above-mentioned method of producing sintered ore. Among the sintered ore production facility, facilities other than the sintered ore production device 10 may be referred to as other production facilities. As illustrated in FIG. 3, the sintered ore production device 10 includes a memory 11, an acquisition interface 12, an FeO content of sintered ore predictor 13, a control amount calculator 14, and an output interface 15. The sintered ore production device 10 may further include a learning unit 16. The sintered ore production device 10 acquires data relating to the operational conditions in the sintered ore production facility, that is, the aforementioned input data, from an operation data server 60. The input data includes actual values of features such as exhaust gas NOₓ concentration, exhaust gas O₂ concentration, exhaust gas temperature, and the agglomerating material blending ratio. The actual values include the measured values and the set values of the operational variable. Furthermore, the sintered ore production device 10 may acquire a target range of the FeO content of sintered ore from the operation data server 60. The operation data server 60 is capable of communicating with the sintered ore production device 10 via a network, and may be realized by, for example, a computer that collects data related to the production of sintered ore. The network is, for example, the Internet. The sintered ore production device 10 performs the above process, i.e., a process of predicting the FeO content of sintered ore using a prediction model, and determining the control amount for the operational variable, such as the agglomerating material blending ratio, so that the future FeO content of sintered ore is maintained within a target range. In addition, in the present embodiment, the sintered ore production device 10 has a function of outputting the control amount for the operational variable by the output interface 15 to the sintered ore production facility or a function of presenting the control amount as a guidance control amount. When the output interface 15 presents the guidance control amount, the sintered ore production device 10 functions as an operational guidance device. A display 30 displays the guidance control amount outputted from the sintered ore production device 10 (operational guidance device). The sintered ore production device 10 may be configured as a computer (for example, a process computer that manages the operation of the sintering machine or a sinter operation guidance server) separate from the operation data server 60. The display 30 may be a display device such as a liquid crystal display or an organic electro-luminescence panel. The display 30 may be realized by a display of a terminal device such as a smartphone or a tablet. The terminal device can communicate with the sintered ore production device 10 via a network. A sintering operational guidance system may be configured by a sintering operational guidance server having the functions of the sintered ore production device 10 and a terminal device having the functions of the display 30. The sintering operational guidance server and the terminal device may be located in the same place (for example, in the same factory) or may be located physically apart. The sintering operational guidance system may be configured to include the operation data server 60.

Here, the prediction model may be generated by the sintered ore production device 10 and stored in the memory 11, or may be generated by another computer and stored in the memory 11. In the case in which the sintered ore production device 10 generates the prediction model, the sintered ore production device 10 may further include a model generator that generates the prediction model using the aforementioned method and stores the model in the memory 11. Here, the learning unit 16 may also function as the model generator.

The components of the sintered ore production device 10 will be described below. The memory 11 stores the prediction model. The memory 11 also stores programs and data related to the control of the FeO content of sintered ore. The memory 11 may store the acquired input data. The memory 11 may store a target range of the FeO content of sintered ore. The memory 11 may store various information obtained in the process for controlling the FeO content of sintered ore. The memory 11 may be configured to include any storage devices, such as semiconductor storage devices, optical storage devices, and magnetic storage devices. A semiconductor storage device may, for example, include a semiconductor memory. The memory 11 may include a plurality of types of storage devices.

The acquisition interface 12 acquires input data. The acquisition interface 12 preferably acquires the features of the input data taking into consideration a delay time based on the timing at which the FeO content of sintered ore can be identified.

The FeO content of sintered ore predictor 13 predicts the FeO content of sintered ore after a predetermined time based on the acquired input data. A prediction model is used to predict the FeO content of sintered ore.

The control amount calculator 14 calculates the control amount for the operational variable based on the predicted FeO content of sintered ore and a predetermined target range for the FeO content of sintered ore. The operational variables include the agglomerating material blending ratio.

The output interface 15 outputs the calculated control amount to another production facility (facility other than the sintered ore production device 10), or displays the control amount on the display 30 as a guidance control amount.

In a case in which the control amount for the operational variable is output from the output interface 15 to another production facility, the facility that receives the control amount may automatically update the operational variable to produce sintered ore. The operator may change the operational conditions of the sintering machine based on the guidance control amount displayed on the display 30. If the FeO content of sintered ore exceeds a preset target range in the future, the operator may take action to reduce the FeO content of sintered ore by reducing the agglomerating material blending ratio. If the FeO content of sintered ore falls below the target range, the operator may take action to increase the FeO content of sintered ore by increasing the agglomerating material blending ratio.

The learning unit 16 evaluates the error of the prediction model (i.e., the prediction error of the predicted FeO content of sintered ore) and performs additional learning or relearning of the prediction model according to a predetermined standard to maintain the accuracy of the prediction model.

The prediction error is the difference between the actual value and the predicted value, and can therefore be evaluated when the actual value of the FeO content of sintered ore is obtained. The learning unit 16 evaluates the performance of the prediction model by monitoring the prediction error. The learning unit 16 can maintain the accuracy of the prediction model by additionally learning or relearning the prediction model using recent data that has generated an error larger than the reference value. Incremental learning is the process of performing additional machine learning on a prediction model using new training data that is added. Relearning involves performing machine learning again on a prediction model using the training data used in previous machine learning (i.e., training data used in the past).

For example, when an actual value is obtained, and the error obtained by comparing the actual value with the corresponding predicted value is more than several times (for example, 3σ) larger than the standard deviation (σ) of the prediction error at the time the prediction model was created, the learning unit 16 may perform additional learning using several recent actual values, including this actual value, as training data. The learning unit 16 may also monitor the average error and standard deviation of the prediction errors based on data for a longer period and determine thresholds for each of the average error and standard deviation. For example, if the past average error or standard deviation for a predetermined most recent period exceeds an average error threshold or standard deviation threshold, the learning unit 16 may use data from that period to perform additional learning of the prediction model and update the prediction model. As described above, the analysis of the FeO content of sintered ore takes about 5 hours. This time includes the time for one cycle from discharging the raw material to sintering it to yield sintered ore. It is desirable to evaluate the error of the prediction model using data for a period of time equal to or longer than the period required to analyze the FeO content of sintered ore.

When performing relearning rather than additional learning, the learning unit 16 may use training data formed by the training data used to train the prediction model currently in use, with the addition of data from the most recent predetermined period described in the aforementioned additional learning. In the case of relearning, it is preferable to use data from a longer period than in the case of additional learning, and for example, data from several days (data accumulated on a daily basis) may be used. Also, for example, data from about one month may be used.

As described above, the sintered ore production device 10 can be realized by a computer, for example. The computer includes a memory and hard disk drive (storage device), a CPU (processing unit), and the like, for example. Programs can be stored on the hard disk drive and read from the hard disk drive into memory when the programs are to be executed by the CPU. Data during processed is stored in memory and on a hard disk drive if necessary. The memory 11 may, for example, be realized by a storage device. The acquisition interface 12, the FeO content of sintered ore predictor 13, the control amount calculator 14, the output interface 15, and the learning unit 16 may be realized by, for example, a CPU executing a program.

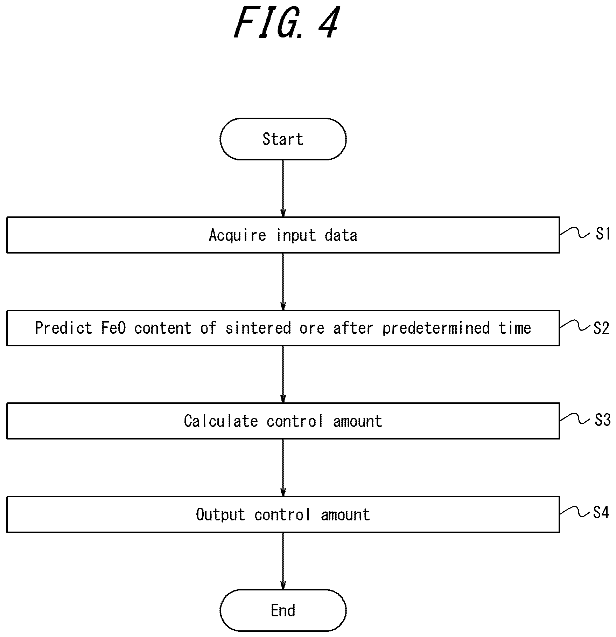

FIG. 4 is a flowchart illustrating the method of producing sintered ore according to the present embodiment. The sintered ore production device 10 calculates the control amount for the operational variable according to the flowchart illustrated in FIG. 4.

The acquisition interface 12 acquires input data (step S1, acquisition step). The FeO content of sintered ore predictor 13 predicts the FeO content of sintered ore after a predetermined time using the input data and the prediction model (step S2, FeO content of sintered ore prediction step). The control amount calculator 14 calculates the control amount for the operational variable so that the predicted value of the FeO content of sintered ore falls within the target range (step S3, control amount calculation step). The output interface 15 outputs the calculated control amount (step S4, output step).

### (Example 1)

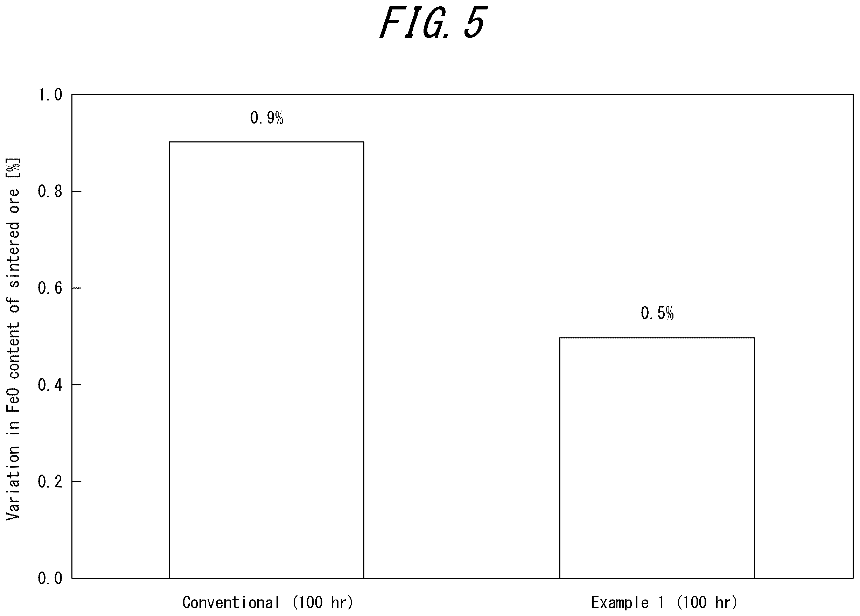

Specific examples (Examples) in which the optimal control amount for the operational variable is determined by the above method will be described below. In Example 1, the FeO content of sintered ore 5 hours in advance was predicted in a sintering line using a machine learning model based on a neural network. The input data were the raw material brand, moisture content of raw material, water spraying flow rate in a granulation mixer, agglomerating material blending ratio, quicklime blending ratio, iron ore blending ratio, return ore blending ratio, exhaust gas NOₓ concentration, exhaust gas O₂ concentration, exhaust gas CO concentration, exhaust gas CO₂ concentration, exhaust gas temperature, cooler blast pressure, pallet speed, layer thickness, and production quantity. The target range for the FeO content of sintered ore was set to 6 % to 7 %. When the FeO content of sintered ore was below 6 %, the agglomerating material blending ratio was increased. Furthermore, when the FeO content of sintered ore was higher than 7 %, an action was taken to reduce the agglomerating material blending ratio. The control amount of the agglomerating material blending ratio per operation was fixed at 0.02 %, and the operation (action) was carried out every 2 hours. As illustrated in FIG. 5, in the conventional operation (operation in which adjustments are made by an operator based on experience), the variation in the FeO content of sintered ore after 100 hours of operation was 0.90 %. The variation in the FeO content of sintered ore is the standard deviation. By applying the method of the present embodiment, the variation in the FeO content of sintered ore was 0.50 % after 100 hours of operation. By applying the method of the present embodiment, it is possible to reduce the variation in the FeO content of sintered ore.

### (Example 2)

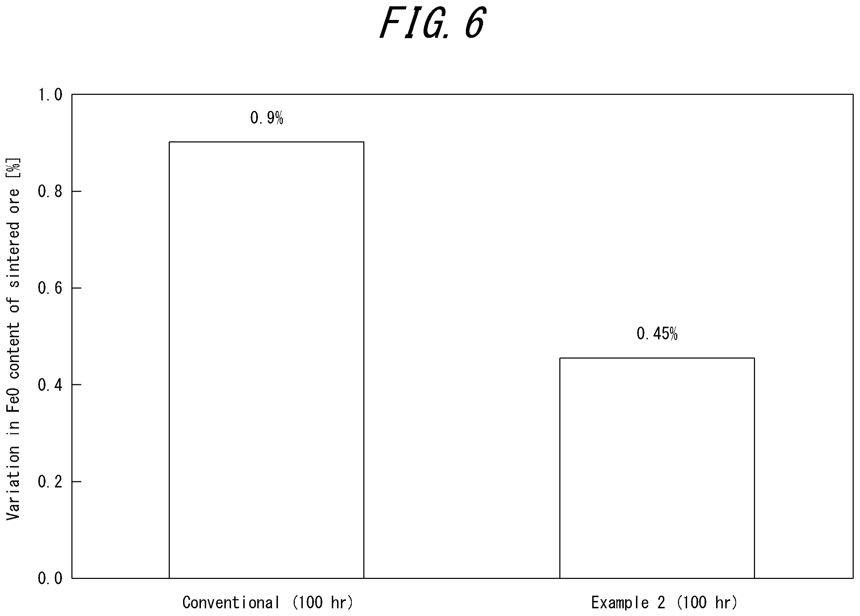

In Example 2, the FeO content of sintered ore 5 hours in advance was predicted in a sintering line using a machine learning model based on a neural network. The input data were the raw material brand, moisture content of raw material, water spraying flow rate in a granulation mixer, agglomerating material blending ratio, quicklime blending ratio, iron ore blending ratio, return ore blending ratio, exhaust gas NOₓ concentration, exhaust gas O₂ concentration, exhaust gas CO concentration, exhaust gas CO₂ concentration, exhaust gas temperature, cooler blast pressure, pallet speed, layer thickness, and production quantity. The target range for the FeO content of sintered ore was set to 6 % to 7 %. When the FeO content of sintered ore was below 6 %, the agglomerating material blending ratio was increased. Furthermore, when the FeO content of sintered ore was higher than 7 %, an action was taken to reduce the agglomerating material blending ratio. The control amount of the agglomerating material blending ratio was determined by inverse analysis based on the calculation results of the machine learning model. Although the inverse analysis is not limited to a specific method, in the present embodiment, the input data of the machine learning model was changed and multiple calculations were performed, and the optimal control amount for the agglomerating material blending ratio was searched for using the bisection method. Actions were performed every 2 hours. As illustrated in FIG. 6, in the conventional operation (adjustments made by an operator based on experience), the variation in the FeO content of sintered ore after 100 hours of operation was 0.90 %. The variation in the FeO content of sintered ore is the standard deviation. By applying the method of the present embodiment, the variation in the FeO content of sintered ore was 0.45 % after 100 hours of operation. By applying the method of the present embodiment, it is possible to reduce the variation in the FeO content of sintered ore.

As described above, it can be seen from the above Examples that the sintered ore production device 10 and method of producing sintered ore according to the present embodiment can predict the FeO content of sintered ore with high accuracy and control the FeO content of sintered ore to be within a target range. By suppressing the variation in the FeO content of sintered ore, the variation in the Reduction Degradation Index (RDI) during blast furnace operation is also reduced, making it possible to avoid deterioration of furnace conditions.

While embodiments according to the present disclosure have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each component, each step, or the like can be rearranged without logical inconsistency, and a plurality of components, steps, or the like can be combined into one or divided. Embodiments according to the present disclosure can also be realized as a program executed by a processor included in an apparatus or as a storage medium having the program recorded thereon. Such embodiments are also to be understood as included in the scope of the present disclosure.

The configuration of the sintered ore production device 10 illustrated in FIG. 3 is an example. The sintered ore production device 10 does not need to include all of the components illustrated in FIG. 3. The sintered ore production device 10 may also include components other than those illustrated in FIG. 3. For example, the sintered ore production device 10 may further include a display 30.

### REFERENCE SIGNS LIST

- 10: Sintered ore production device
- 11: Memory
- 12: Acquisition interface
- 13: FeO content of sintered ore predictor
- 14: Control amount calculator
- 15: Output interface
- 16: Learning unit
- 30: Display
- 60: Operation data server

## Claims

1. A sintered ore production device comprising:
an acquisition interface configured to acquire data on operational conditions in a sintered ore production facility as input data;
an FeO content of sintered ore predictor configured to predict an FeO content of sintered ore after a predetermined time based on the acquired input data;
a control amount calculator configured to calculate a control amount of a blending ratio of an agglomerating material based on the predicted FeO content of sintered ore and a predetermined target range of the FeO content of sintered ore; and
an output interface configured to output the calculated control amount to another production facility or present the calculated control amount as a guidance control amount.

2. The sintered ore production device according to claim 1, wherein the input data includes at least one of a raw material brand, moisture content of raw material, water spraying flow rate in a granulation mixer, agglomerating material blending ratio, quicklime blending ratio, iron ore blending ratio, return ore blending ratio, exhaust gas NOₓ concentration, exhaust gas O₂ concentration, exhaust gas CO concentration, exhaust gas CO₂ concentration, exhaust gas SOₓ concentration, exhaust gas temperature, cooler blast pressure, cooler exhaust gas temperature, pallet speed, layer thickness, and production quantity.

3. The sintered ore production device according to claim 1 or 2, wherein the FeO content of sintered ore predictor predicts the FeO content of sintered ore using, as the input data, data acquired taking into consideration a delay time based on a timing at which the FeO content of sintered ore can be identified.

4. The sintered ore production device according to any one of claims 1 to 3, further comprising a learning unit configured to evaluate a prediction error of the predicted FeO content of sintered ore and perform additional learning or relearning of a prediction model used in the FeO content of sintered ore predictor according to a predetermined standard.

5. A method of producing sintered ore, the method comprising:
acquiring data on operational conditions in a sintered ore production facility as input data;
predicting an FeO content of sintered ore after a predetermined time based on the acquired input data;
calculating a control amount of a blending ratio of an agglomerating material based on the predicted FeO content of sintered ore and a predetermined target range of the FeO content of sintered ore; and
outputting the calculated control amount to another production facility or presenting the calculated control amount as a guidance control amount.
